# EUROPEAN PATENT APPLICATION

(11) **EP 3 473 944 A1**
(43) Date of publication of application: **24.04.2019**
(21) Application number: 18167709.7
(22) Date of filing: 17.04.2018
(51) Int. Cl.: F24F 11/00, F24F 3/16, F24F 7/00, F24F 110/10, F24F 110/70

(54) **AIR PURIFICATION APPARATUS FOR INDOOR WINDOW VENT**

(30) Priority: 20.10.2017 CN 201710986345
(71) Applicant: Linyi Jigang Agricultural Technology Co., Ltd., 277700 Linyi City, Shandong (CN)
(72) Inventor: JI, Jinggang, Linyi City, Shandong 277700 (CN); JI, Feng, Linyi City, Shandong 277700 (CN); GUI, Lihua, Linyi City, Shandong 277700 (CN); LIU, Bangli, Linyi City, Shandong 277700 (CN)
(74) Representative: Vitina, Maruta

(57) **Abstract**

The present invention discloses an air purification apparatus for an indoor window vent. The air purification apparatus comprises an installing plate. Fixing blocks are welded on both sides of the installing plate. Installing holes are formed in the fixing blocks. An air purification module is installed in the middle position of the installing plate. An air outlet apparatus is arranged on one side of the air purification module. The air purification module comprises an air duct. An active carbon filtering unit and a PM2.5 purification unit are respectively installed in the air duct. A filter mesh and a first fan are respectively arranged on one side of the active carbon filtering unit and the PM2.5 purification unit which are away from each other. The filter mesh and the first fan are fixed into the air duct. A cleaning brush is vertically arranged on one side of the filter mesh away from the active carbon filtering unit. The cleaning brush is connected with a side wall of the filter mesh in a sliding mode, and the cleaning brush is connected into the air duct in a sliding mode. The present invention can seal window vents with different sizes without affecting the opening and closing of windows, can purify air that enters a room, and has good purification effect.

## Description

### TECHNICAL FIELD

The present invention relates to the technical field of air purification, and particularly relates to an air purification apparatus for an indoor window vent.

### BACKGROUND

Air purifier is also called as an "air cleaner", and refers to a product that can absorb, decompose or convert various air pollutants (generally including decoration pollutants such as dust, pollen, undesirable odor and formaldehyde, bacteria, allergen, etc.) and can effectively enhance air cleanness. At present, some air purifiers can realize purification of indoor air, but have high cost and large volume and do not allow to open a window. Such purifiers cannot convect and exchange the indoor air and outside air. Although the indoor air is purified, because the indoor air cannot convect and exchange with the outside air, the content of indoor oxygen is reduced, which is not favorable for human health. Thus, an air purification apparatus for an indoor window vent is proposed.

### SUMMARY

The purpose of the present invention is to propose an air purification apparatus for an indoor window vent in order to solve disadvantages in the prior art.

To achieve the above purpose, the present invention adopts the following technical solution:
An air purification apparatus for an indoor window vent comprises an installing plate, wherein fixing blocks are welded on both sides of the installing plate; installing holes are formed in the fixing blocks; an air purification module is installed in the middle position of the installing plate; an air outlet apparatus is arranged on one side of the air purification module; the air purification module comprises an air duct; an active carbon filtering unit and a PM2.5 purification unit are respectively installed in the air duct; a filter mesh and a first fan are respectively arranged on one side of the active carbon filtering unit and the PM2.5 purification unit which are away from each other; the filter mesh and the first fan are fixed into the air duct; a cleaning brush is vertically arranged on one side of the filter mesh away from the active carbon filtering unit; the cleaning brush is connected with a side wall of the filter mesh in a sliding mode, and the cleaning brush is connected into the air duct in a sliding mode; two first springs are connected to one end of the cleaning brush; one end of each of the first springs is fixed to an inner wall of the air duct; the other end of the cleaning brush is connected with a connecting rope; one end of the connecting rope penetrates through the side wall of the air duct and is connected with a pull ring; placing cavities are arranged on top side wall and the bottom side wall of the installing plate; the interiors of the placing cavities are rotatably connected with rotating rollers; one end of each of the rotating rollers is connected with a volute spiral spring; one end of the volute spiral spring is fixed to the side wall of the placing cavity; discharging ports are formed in the side wall of one side of each of two placing cavities which are away from each other; an isolating plate is wound on the rotating rollers; one end of the isolating plate penetrates through the discharging ports and is connected with a positioning block; a magnet block is embedded on the positioning block; the air outlet apparatus comprises an air outlet cylinder; a dustproof net and a second fan that draws air from inside to outside are installed in the air outlet cylinder; one side of the dustproof net is provided with the second fan; a sealing block is arranged on one side of the dustproof net away from the second fan; the sealing block is connected into the air outlet cylinder in a sliding and sealing mode; four uniformly-distributed second springs are connected to the sealing block; and one end of each of the second springs is connected to an inner wall of the air outlet cylinder.

Preferably, the isolating plate comprises a flexible transparent plastic plate and two connecting bands; both sides of the flexible transparent plastic plate are connected with the connecting bands; the connecting bands are hollow structures; and magnet particles are filled in the connecting bands.

Preferably, two sealing strips are embedded into the side wall of one side of the installing plate; and the sealing strips are respectively located on both sides of the air purification module.

Preferably, an opening is formed in the top side wall of the air duct; a cover plate is hinged at the opening; sliding chutes are formed in the top inner wall and the bottom inner wall of the air duct; and both ends of the cleaning brush are respectively connected into the sliding chutes in a sliding mode.

Preferably, a vertical section of the air duct is rectangular.

Preferably, a temperature sensor, a carbon dioxide concentration sensor and a controller are installed on the installing plate; an input end of the controller is connected with a power supply, the temperature sensor and the carbon dioxide concentration sensor; and an output end of the controller is connected with the first fan and the second fan.

Preferably, a sealing ring is arranged on a connecting part between the sealing block and the air outlet cylinder; the sealing ring is embedded on the sealing block; the sealing block (13) is connected with two guiding rods; two guiding grooves are formed in the air outlet cylinder; and guiding blocks are connected into the guiding grooves in a sliding mode.

The present invention proposes an air purification apparatus for an indoor window vent. Through the arrangement of the fixing blocks, the air purification module, the installing plate, the placing cavities, twisting rollers, the discharging ports, the positioning block, the magnet block, the isolating plate and the first volute spring, window vents with different sizes can be sealed; outdoor air is guided into the room for ventilation; and meanwhile, the air that enters the room during ventilation is purified, thereby reducing the entering amount of outside air pollutants.

Through the arrangement of the second fan, the sealing block, the guiding rods, the second springs, the dustproof net and the air outlet cylinder, indoor vitiated air can be guided out of the room without passing through the air purification apparatus, thereby reducing loss of material in the air purification apparatus.

Through the arrangement of the controller, the temperature sensor and the carbon dioxide concentration sensor, when the apparatus senses that indoor temperature is high or carbon dioxide concentration is too high, ventilation and heat dissipation can be realized automatically. The apparatus can seal window vents with different sizes without affecting the opening and closing of windows, can purify air that enters a room, has good purification effect and also has the function of automatic ventilation and heat dissipation.

### DESCRIPTION OF DRAWINGS

Fig. 1 is a structural schematic diagram of an air purification apparatus for an indoor window vent proposed in the present invention;
Fig. 2 is a lateral structural schematic diagram of an air purification module of an air purification apparatus for an indoor window vent proposed in the present invention;
Fig. 3 is a front structural schematic diagram of an air purification module of an air purification apparatus for an indoor window vent proposed in the present invention;
Fig. 4 is a structural schematic diagram of an isolating plate of an air purification apparatus for an indoor window vent proposed in the present invention; and
Fig. 5 is a structural schematic diagram of an air outlet apparatus of an air purification apparatus for an indoor window vent proposed in the present invention.

In the figures: 1 fixing block; 2 air purification module; 21 filter mesh; 22 cleaning brush; 23 air duct; 24 active carbon filtering unit; 25 PM2.5 purification unit; 26 first fan; 27 first spring; 28 connecting rope; 29 pull ring; 3 installing plate; 4 placing cavity; 5 winding roller; 6 discharging port; 7 positioning block; 8 magnet block; 9 isolating plate; 91 flexible transparent plastic plate; 92 magnet particle; 93 connecting band; 10 volute spiral spring; 11 air outlet apparatus; 12 second fan; 13 sealing block; 14 guiding rod; 15 second spring; 16 dustproof net; and 17 air outlet cylinder.

### DETAILED DESCRIPTION

Technical solutions of embodiments of the present invention will be clearly and fully described below in combination with drawings in embodiments of the present invention. Apparently, described embodiments are merely some embodiments of the present invention, not all of the embodiments.

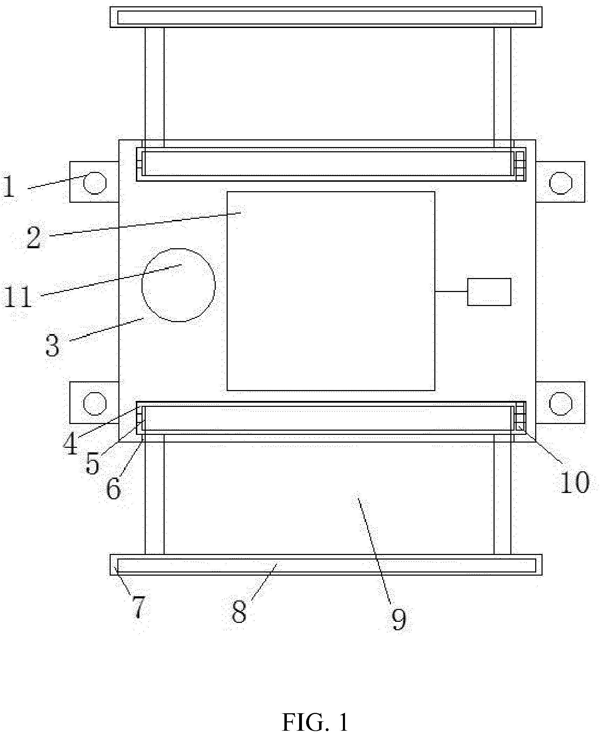

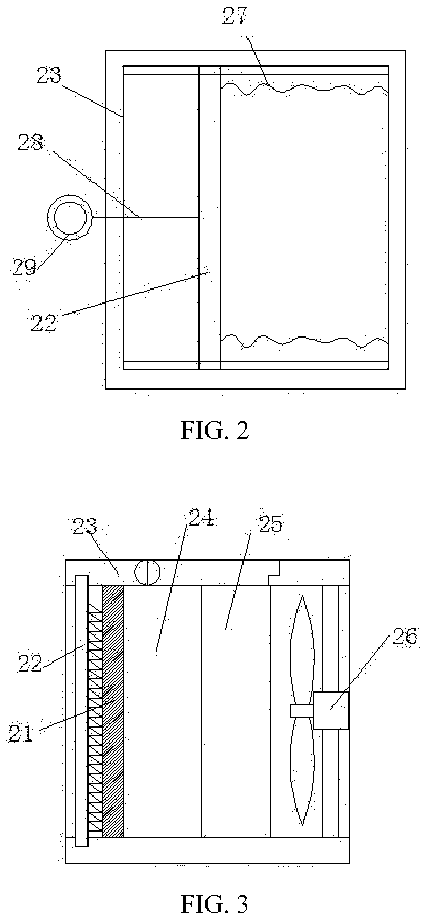

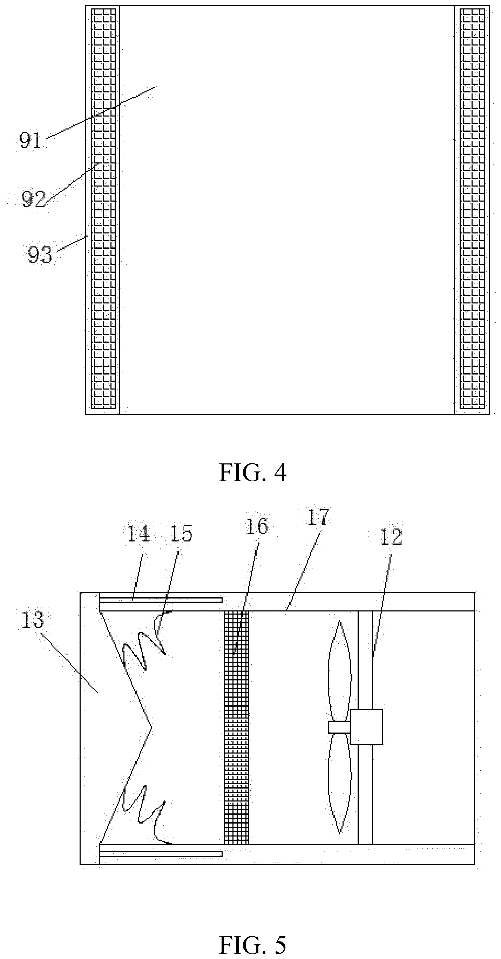

With reference to Figs. 1-4, an air purification apparatus for an indoor window vent comprises an installing plate 3, wherein fixing blocks 1 are welded on both sides of the installing plate 3; installing holes are formed in the fixing blocks 1; an air purification module 2 is installed in the middle position of the installing plate 3; an air outlet apparatus 11 is arranged on one side of the air purification module 2; the air purification module 2 comprises an air duct 23; an active carbon filtering unit 24 and a PM2.5 purification unit 25 are respectively installed in the air duct 23; a filter mesh 21 and a first fan 26 are respectively arranged on one side of the active carbon filtering unit 24 and the PM2.5 purification unit 25 which are away from each other; the filter mesh 21 and the first fan 26 are fixed into the air duct 23; a cleaning brush 22 is vertically arranged on one side of the filter mesh 21 away from the active carbon filtering unit 24; the cleaning brush 22 is connected with a side wall of the filter mesh 21 in a sliding mode, and the cleaning brush 22 is connected into the air duct 23 in a sliding mode; two first springs 27 are connected to one end of the cleaning brush 22; one end of each of the first springs 27 is fixed to an inner wall of the air duct 23; the other end of the cleaning brush 22 is connected with a connecting rope 28; one end of the connecting rope 28 penetrates through the side wall of the air duct 23 and is connected with a pull ring 29; placing cavities 4 are arranged on top side wall and the bottom side wall of the installing plate 3; the interiors of the placing cavities 4 are rotatably connected with rotating rollers 5; one end of each of the rotating rollers 5 is connected with a volute spiral spring 10; one end of the volute spiral spring 10 is fixed to the side wall of the placing cavity 4; discharging ports 6 are formed in the side wall of one side of each of two placing cavities 4 which are away from each other; an isolating plate 9 is wound on the rotating rollers 5; one end of the isolating plate 9 penetrates through the discharging ports 6 and is connected with a positioning block 7; a magnet block 8 is embedded on the positioning block 7; the air outlet apparatus 11 comprises an air outlet cylinder 17; a dustproof net 16 and a second fan 12 that draws air from inside to outside are installed in the air outlet cylinder 17; one side of the dustproof net 16 is provided with the second fan 12; a sealing block 13 is arranged on one side of the dustproof net 16 away from the second fan 12; the sealing block 13 is connected into the air outlet cylinder 17 in a sliding and sealing mode; four uniformly-distributed second springs 15 are connected to the sealing block 13; and one end of each of the second springs 15 is connected to an inner wall of the air outlet cylinder 17. The isolating plate 9 comprises a flexible transparent plastic plate 91 and two connecting bands 93; both sides of the flexible transparent plastic plate 91 are connected with the connecting bands 93; the connecting bands 93 are hollow structures; and magnet particles 92 are filled in the connecting bands 93. Two sealing strips are embedded into the side wall of one side of the installing plate 1; and the sealing strips are respectively located on both sides of the air purification module 2. An opening is formed in the top side wall of the air duct 23; a cover plate is hinged at the opening; sliding chutes are formed in the top inner wall and the bottom inner wall of the air duct 23; and both ends of the cleaning brush 22 are respectively connected into the sliding chutes in a sliding mode. A vertical section of the air duct 23 is rectangular. A temperature sensor, a carbon dioxide concentration sensor and a controller are installed on the installing plate 3; an input end of the controller is connected with a power supply, the temperature sensor and the carbon dioxide concentration sensor; and an output end of the controller is connected with the first fan 26 and the second fan 12. A sealing ring is arranged on a connecting part between the sealing block 13 and the air outlet cylinder 17; the sealing ring is embedded on the sealing block 13; the sealing block 13 is connected with two guiding rods 14; two guiding grooves are formed in the air outlet cylinder 17; and guiding blocks are connected into the guiding grooves in a sliding mode.

Embodiment: During use, the installing plate 3 is fixed to the window vent through the installing holes in the fixing blocks 1, and is fixed through screws. During ventilation, the window is opened; two positioning blocks 7 are pulled so that the positioning blocks 7 continuously pull out the isolating plate 9; the volute spiral spring 10 is driven and tightened; and the magnet block 8 on the positioning block 7 is absorbed to a frame of the window. Meanwhile, the magnet particles in the connecting band 93 on the isolating plate 9 are absorbed to the frame of the window so that the flexible transparent plastic plate and the window are kept sealed. The first fan 26 is started. The air outside the first fan 26 is guided into the room. Dust odor in the air is removed through the filter mesh 21, the active carbon filtering unit 24 and the PM2.5 purification unit 25. The purification effect is excellent. After use for a period of time, the pull ring 29 is pulled. The pull ring 29 drives the cleaning brush 22 through the connecting rope 28 to slide in the air duct 23. The first springs 27 are stretched. The cleaning brush 22 removes dust accumulated on the filter mesh 21. The controller detects the indoor temperature and the carbon dioxide concentration at any time through the temperature sensor and the carbon dioxide concentration sensor. When the controller detects that indoor temperature or the carbon dioxide concentration is high, the second fan 12 is automatically controlled to start for guiding the indoor vitiated air out of the room. Meanwhile, the first fan 2 is started for ventilating and guiding the outdoor air into the room through the air purification apparatus 2. The apparatus can seal window vents with different sizes without affecting the opening and closing of windows, can purify air that enters a room, has good purification effect and also has the function of automatic ventilation and heat dissipation.

The above only describes preferred specific embodiments of the present invention, but the protection scope of the present invention is not limited to this. Equivalent replacements or changes made by those skilled in the art according to the technical solution of the present invention and the inventive concept within the technical scope disclosed by the present invention shall be included in the protection scope of the present invention.

## Claims

1. An air purification apparatus for an indoor window vent, comprising an installing plate (3), wherein fixing blocks (1) are welded on both sides of the installing plate (3); installing holes are formed in the fixing blocks (1); an air purification module (2) is installed in the middle position of the installing plate (3); an air outlet apparatus (11) is arranged on one side of the air purification module (2); the air purification module (2) comprises an air duct (23); an active carbon filtering unit (24) and a PM2.5 purification unit (25) are respectively installed in the air duct (23); a filter mesh (21) and a first fan (26) are respectively arranged on one side of the active carbon filtering unit (24) and the PM2.5 purification unit (25) which are away from each other; the filter mesh (21) and the first fan (26) are fixed into the air duct (23); a cleaning brush (22) is vertically arranged on one side of the filter mesh (21) away from the active carbon filtering unit (24); the cleaning brush (22) is connected with a side wall of the filter mesh (21) in a sliding mode, and the cleaning brush (22) is connected into the air duct (23) in a sliding mode; two first springs (27) are connected to one end of the cleaning brush (22); one end of each of the first springs (27) is fixed to an inner wall of the air duct (23); the other end of the cleaning brush (22) is connected with a connecting rope (28); one end of the connecting rope (28) penetrates through the side wall of the air duct (23) and is connected with a pull ring (29); placing cavities (4) are arranged on top side wall and the bottom side wall of the installing plate (3); the interiors of the placing cavities (4) are rotatably connected with rotating rollers (5); one end of each of the rotating rollers (5) is connected with a volute spiral spring (10); one end of the volute spiral spring (10) is fixed to the side wall of the placing cavity (4); discharging ports (6) are formed in the side wall of one side of each of two placing cavities (4) which are away from each other; an isolating plate (9) is wound on the rotating rollers (5); one end of the isolating plate (9) penetrates through the discharging ports (6) and is connected with a positioning block (7); a magnet block (8) is embedded on the positioning block (7); the air outlet apparatus (11) comprises an air outlet cylinder (17); a dustproof net (16) and a second fan (12) that draws air from inside to outside are installed in the air outlet cylinder (17); one side of the dustproof net (16) is provided with the second fan (12); a sealing block (13) is arranged on one side of the dustproof net (16) away from the second fan (12); the sealing block (13) is connected into the air outlet cylinder (17) in a sliding and sealing mode; four uniformly-distributed second springs (15) are connected to the sealing block (13); and one end of each of the second springs (15) is connected to an inner wall of the air outlet cylinder (17).

2. The air purification apparatus for the indoor window vent according to claim 1, wherein the isolating plate (9) comprises a flexible transparent plastic plate (91) and two connecting bands (93); both sides of the flexible transparent plastic plate (91) are connected with the connecting bands (93); the connecting bands (93) are hollow structures; and magnet particles (92) are filled in the connecting bands (93).

3. The air purification apparatus for the indoor window vent according to claim 1, wherein two sealing strips are embedded into the side wall of one side of the installing plate (1); and the sealing strips are respectively located on both sides of the air purification module (2).

4. The air purification apparatus for the indoor window vent according to claim 1, wherein an opening is formed in the top side wall of the air duct (23); a cover plate is hinged at the opening; sliding chutes are formed in the top inner wall and the bottom inner wall of the air duct (23); and both ends of the cleaning brush (22) are respectively connected into the sliding chutes in a sliding mode.

5. The air purification apparatus for the indoor window vent according to claim 1, wherein a vertical section of the air duct (23) is rectangular.

6. The air purification apparatus for the indoor window vent according to claim 1, wherein a temperature sensor, a carbon dioxide concentration sensor and a controller are installed on the installing plate (3); an input end of the controller is connected with a power supply, the temperature sensor and the carbon dioxide concentration sensor; and an output end of the controller is connected with the first fan (26) and the second fan (12).

7. The air purification apparatus for the indoor window vent according to claim 1, wherein a sealing ring is arranged on a connecting part between the sealing block (13) and the air outlet cylinder (17); the sealing ring is embedded on the sealing block (13); the sealing block (13) is connected with two guiding rods (14); two guiding grooves are formed in the air outlet cylinder (17); and guiding blocks are connected into the guiding grooves in a sliding mode.
